# EUROPEAN PATENT SPECIFICATION

(11) **EP 3 935 286 B1**
(45) Date of publication and mention of the grant of the patent: **13.08.2025**
(21) Application number: 20714463.5
(22) Date of filing: 09.03.2020
(51) Int. Cl.: F16B 13/08

(54) **WALL FIXING DEVICE**
WANDBEFESTIGUNGSVORRICHTUNG
DISPOSITIF DE FIXATION MURALE

(30) Priority: 08.03.2019 GB 201903142
(43) Date of publication of application: 12.01.2022
(73) Proprietor: Goodenough, Christopher, London SW6 7TS (GB)
(72) Inventor: Goodenough, Christopher, London SW6 7TS (GB)
(74) Representative: Sanger, Phillip Simon
(86) International application number: PCT/EP2020/056265
(87) International publication number: WO 2020/182769

(56) References cited:
- US-A- 1 829 357
- US-A- 4 500 238
- US-A1- 2014 271 031
- US-A1- 2017 321 737

## Description

The present invention relates to a wall fixing device. More specifically, the present invention relates to a mechanical fixing device for attachment of a fastener to a plasterboard panel or other similar wall panel.

Wall fixings and in particular plasterboard fixings are well known in the art. The general intention is to allow a fastener such as a screw to be attached to a wall. Generally, walls are constructed from materials which are not well suited to engagement by a screw thread. For example, plasterboard is typically quite thin (in the order of 5 - 20mm thick) and is constructed from a material of low density. Although screws can be driven into plasterboard, they loosen quickly and are generally incapable of holding significant shear loads (say from10kg / 100N).

One solution is to use wall plugs. These are inexpensive, single-piece plastic fixings which are inserted into pre-drilled holes in the plasterboard. They have a central hollow body and resilient arms which deform against the hollow body when passing through the hole. Once through, the arms resile and prevent the wall plug from being pulled through the hole. The insertion of a screw into the body further stiffens the plug, and keeps the arms in an extended position.

Wall plugs are inexpensive, but not very strong and prone to failure at high loads.

Further solutions have been proposed for handling higher loads.

GB2484771B proposes a fixing device having a body with an aperture for receiving an anchor of fastener, and a passage spaced from the aperture having a rotating shaft therein. A retaining means is disposed on the shaft, the retaining means being rotatable from a retracted position in which the fixing device can be inserted into / removed from the hole, and an extended position in which the fixing device prevents pull-out. Two or more such retaining means are typically provided.

GB2530303A provides a similar device, but the retaining means can pivot on the shafts. Otherwise, the function is similar.

EP2998592A1 provides a similar device with a moveable over-insertion stop.

In each of these devices, the retaining means needs to be actuated before the fastener is inserted-there is a two-step operation which is time consuming if many such devices need to be installed. It is also difficult to verify that the retaining means have been properly deployed.

One feature that each of these prior art devices has in common is that the retaining means are pivotable about axes generally perpendicular to the wall, and parallel to the fastener aperture. What is means is that the pull-out force tends to place a high degree of stress on the area where the retaining means is joined to the shaft (regardless of whether this is a solid join or a moveable joint). Because of the aforementioned orientation of the retaining means, this means that the torque is applied about an axis normal to the axis of rotation of the retaining means. This can be a point of failure if the device is put under significant pull-out loads.

US1,829.357 discloses a spring toggle. US 2017/0321737 A1 discloses a toggle fastener. US 2014/0271031 A1 discloses a wall fastener.

It is an aim of the present invention to overcome, or at least mitigate this problem.

According to a first aspect there is provided a fixing device for attaching a fastener to a wall according to claim 1.

Preferably the length-adjusting element is rotated about the axis between the first position and the second position.

Preferably the body and the length-adjusting element are attached via a male-female mating connection. More preferably the male-female mating connection comprises a male member configured to mate with a first female formation in the first position and a second female formation in the second position. More preferably the first and second female formations are different axial lengths, limiting the degree of entry of the male member in at least one of the positions.

Preferably the length-adjusting element comprises an indicator indicating the axial length dependent on the position relative to the body.

Preferably the arms are moved from the retracted position to the extended position by insertion of a fastener.

Preferably the fastener passes through the length-adjusting element.

Preferably shafts are defined on the body, and in which the arms define openings arranged to received the shafts to enable pivotable movement.

Preferably the body is constructed from at least two body parts, and in which one of the body parts defines at least one of the shafts, and in which the other of the body parts defines a bore for receiving a free end of the at least one of the shafts.

Preferably the at least two body parts are identical.

Preferably there is provided a central body part between the at least two body parts, wherein the central body part defines the fastener receiving aperture.

Preferably the body is tapered such that it becomes wider approaching an exterior side.

Preferably the body comprises arm abutments spaced apart from the pivot axes of the arms, which arm abutments are configured to abut and thereby restrict movement of each arm off its pivot axis.

Example wall fixing devices will now be described with reference to the accompanying Figures in which:
Figure 1 is a perspective view of a first wall fixing device not in accordance with the present invention in a deployed condition;
Figure 2 is a perspective view of the wall fixing device of Figure 1 in a retracted condition;
Figures 3a and 3b are section views through a panel with the fixing device of Figure 1 partially installed and fully installed therein;
Figure 4 is an exploded view of the fixing device of Figure 1;
Figures 5a and 5b are perspective views of a part of the fixing device of Figure 1;
Figures 6a and 6b are perspective views of a further part of the fixing device of Figure 1;
Figures 7a to 7c are perspective views of a still further part of the fixing device of Figure 1;
Figures 8a and 8b are perspective views of second wall fixing device not in accordance with the present invention in a retracted and deployed condition respectively;
Figures 9a and 9b are perspective views of a part of the wall fixing device of Figures 8a and 8b in an intermediate form and final form respectively;
Figures 10a and 10b are perspective views of a further part of the wall fixing device of Figures 8a and 8b in an intermediate form and final form respectively;
Figure 11 is a perspective section view of the device of Figures 8a and 8b;
Figures 12a and 12b are section views of the device of Figures 8a and 8b in a retracted and deployed condition respectively;
Figures 13a is a perspective view of a wall fixing device in accordance with the present invention in a deployed condition;
Figure 13b is a perspective view of a part of the wall fixing device of Figure 13a;
Figures 14a to 14c are plan, side section and side views of the fixing device of Figure 13a in a first configuration;
Figures 15a to 15c are plan, side section and side views of the fixing device of Figure 13a in a second configuration;
Figure 16a is an exploded view of selected parts of a fourth wall fixing device not according to the invention; and,
Figure 16b is a detail part-section view of the device of Figure 16a
Figure 17a is a perspective view of a fifth wall fixing device not in accordance with the present invention;
Figure 17b is a plan view of the device of Figure 17a;
Figure 17c is a side view of the device of Figure 17a; and,
Figures 17d to 17f are stages of operation of the device of Figure 17a.

### First embodiment

### Structure

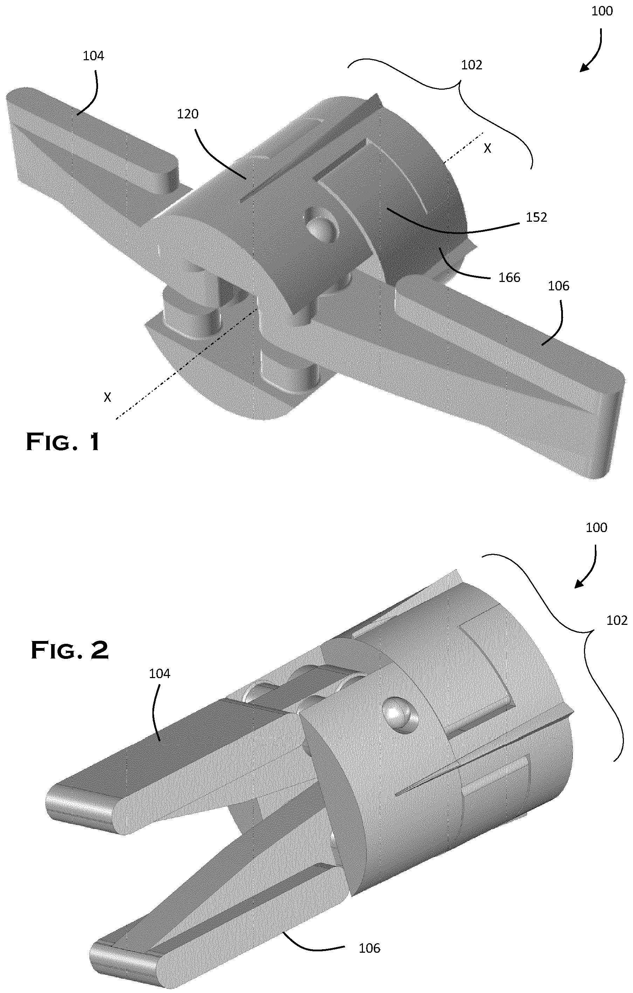

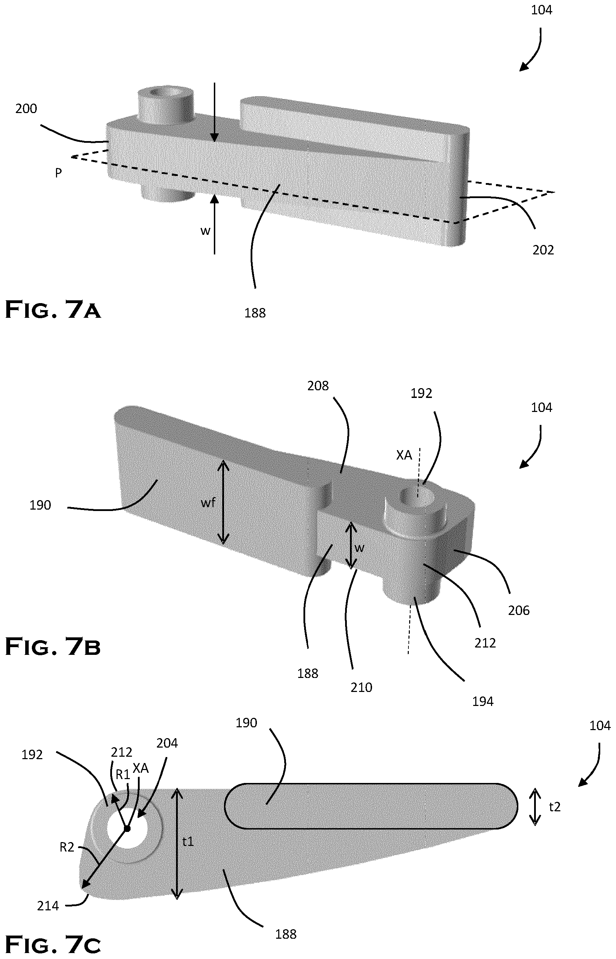

Referring to Figures 1 to 7c, a fixing device 100 not according to the invention comprises a body 102, a first arm 104 and a second arm 106. The body 102 defines a main axis X, which also represents the main axis of insertion of the device 100 (to be described in more detail below).

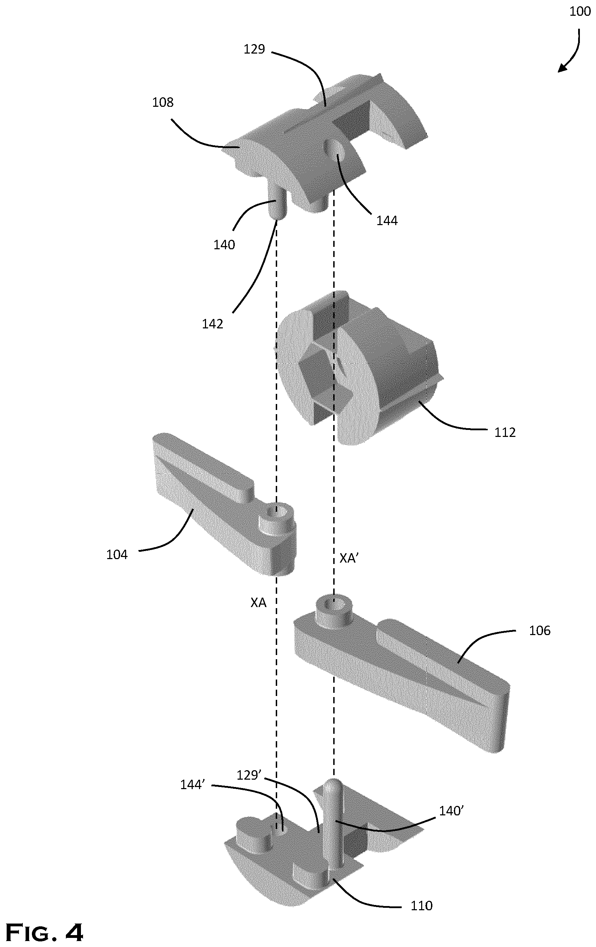

Referring to Figure 4, the body 102 comprises a first side body part 108, a second side body part 110 and a central body part 112.

### Side body parts

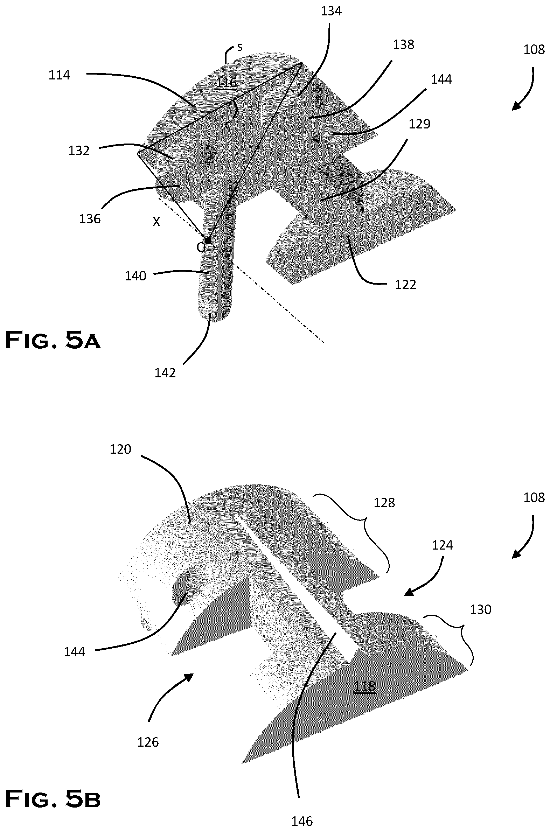

The side body parts are identical, and as such only the first side body part 108 will be described here. Referring to Figures 5a and 5b, the first side body part 108 comprises a main portion 114 being generally prismatic, and having a circle segment cross-section. The circle-segment cross-section has an origin O which lies on the axis X when assembled.

The main portion 114 has a first end face 116, a second end face 118, an external face 120 and an internal face 122. The external face 120 defines a part-cylinder coincident with the arc s of the segment, and the internal face 122 lies on a chord c of the circle segment (and is therefore flat).

The main portion 114 has two slots 124, 126 partway along its axial length. The slots 124, 126 are symmetrical and generally rectangular. A central bridge 129 is defined between the slots such that the main portion 114 defines an "H" shape in plan. Because the slots 124, 126 are not midway along the axial length of the main portion 114, it has a major section 128 on a first side of the slots 124, 126 and a minor section 130 on a second, opposite side of the slots 124, 126.

Extending from the internal face 122 of the major section 128, proximate the first end face 116, there are provided two spaced apart abutments 132, 134. Each abutment 132, 134 is generally obround in cross-section and extends to a free end where a respective abutment face 136, 138 is defined.

On the opposite side of one of the abutments 132 to the first end face 116, there is provided a shaft 140 extending from the internal face 122 of the major section 128. The shaft 140 is longer than the abutment 132 and is generally circular in cross-section having a free end terminating in a hemispherical tip 142.

On the opposite side of the other abutment 134 to the first end face 116, there is provided a shaft aperture 144 extending from the internal face 122 of the major section 128 into the main portion 114. The shaft aperture 144 is an open bore extending to the external face 120.

Also on the external face 120, there is defined an anti-rotation feature in the form of a tapered rib 146. The tapered rib 146 extends in an axial direction from the major section 128, across the bridge 129 to the minor section 130 where it terminates at the second end face 118 of the main portion 114. The tapered rib 146 is triangular in cross-section along its length, but tapers to become wider and taller as it extends towards the second end face 118.

### Central body part

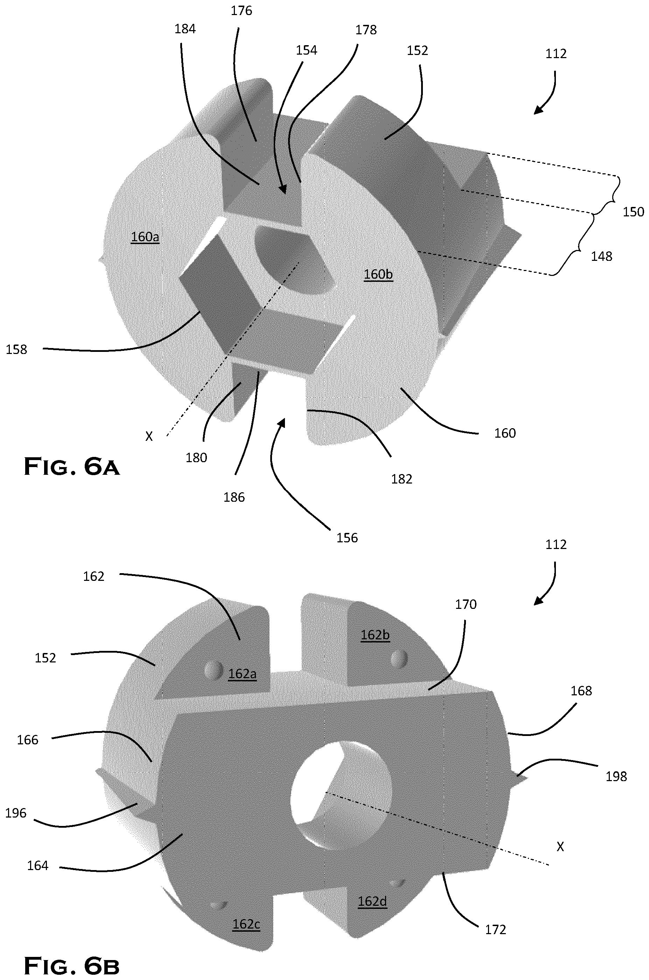

The central body part 112 is shown in Figures 6a and 6b. The central body part 112 comprises a first portion 148 and a second portion 150.

The first portion 148 is a generally cylindrical body having an end surface 160, a shoulder surface 162 opposite the end surface 160 and a radially outer curved surface 152 joining the end and shoulder surfaces. The radially outer surface 152 is interrupted by first and second diametrically opposed fist radially extending recesses 154, 156. Each recess 154, 156 is generally rectangular in shape, having sidewalls 176, 178 and 180, 182 respectively and base walls 184 and 186 respectively. and divides the end surface 160 into two portions 160a, 160b. At the centre of the first portion 148,open to the end surface 160, there is provided a hexagonal bore 158, which extends in an axial direction along X.

The second portion 150 is generally rectangular in shape, extending from the first portion and being oriented at 90 degrees to the recesses 154, 156 of the first portion 148. The second portion 150 with the recesses 156, 158 subdivides the shoulder surface 162 into four portions 1621, 162b, 162c, 162d. The second portion 150 defines an end surface 164, two opposed curved side surfaces 166, 168 (which are continuous with the radially outer surface 152 of the first portion 148) and to flat, planar opposed side surfaces 170, 172. The side surfaces 170, 172 are continuous with the base surfaces 184, 186 of the recesses 154, 165 respectively. A cylindrical bore 174 extends from the end surface 164 and is continuous with the hexagonal bore 158.

Also on the radially outer faces of the central body part 112, there are defined two diametrically opposed anti-rotation features in the form of tapered ribs 196, 198. The tapered ribs 196, 198 extend in an axial direction from first portion 148 to the second portion 150. The tapered ribs 196, 198 are triangular in cross-section along their length, but taper to become wider and taller as they extend from the end face 160 of the first portion 148 to the end face 164 of the second portion 150.

### Arms

The arms 104, 106 are identical, and as such only the first arm 104 will be described here. Referring to Figures 7a to 7c, the arm 104 comprises a central portion 188, a foot 190 and two bosses 192, 194. Each arm 104 is generally elongate and symmetrical about a plane of symmetry P.

The central portion 188 has a pivot end 200 and a free end 202. The central portion tapers from a first thickness t1 at the pivot end 200 to a second lower thickness t2 at the free end 202. An arm pivot axis XA is defined by a through bore 204 at the pivot end 200. The arm pivot axis XA extends normal to the plane P. The central portion 188 has an outer surface 206 and two opposed flat, planar side surfaces 208, 210. The side surfaces 208, 210 are a width w apart.

The outer surface 206 comprises a first curved portion 212 at a first radius R1 from the pivot axis XA, and a second curved portion 214 at a second, greater radius R2 from the pivot axis XA, thus forming a cam (as will be described below).

The foot 190 is generally flat, extending from the free end 202 of the central portion 188 partway towards the pivot end 200 and having a contact surface 216 being of width wf where wf > w.

Each boss 192, 194 extends axially along XA and is generally formed as a hollow cylinder. The boss 192 extends from the surface 208, and the boss 194 from the surface 210.

Each of the body parts 108, 110, 112 and the arms 104, 106 are unitary moulded components constructed from a plastics material. In this embodiment, they are constructed from the same material.

### Assembly

The features of the second arm 106 and second side body part 112 will be referred to using an apostrophe.

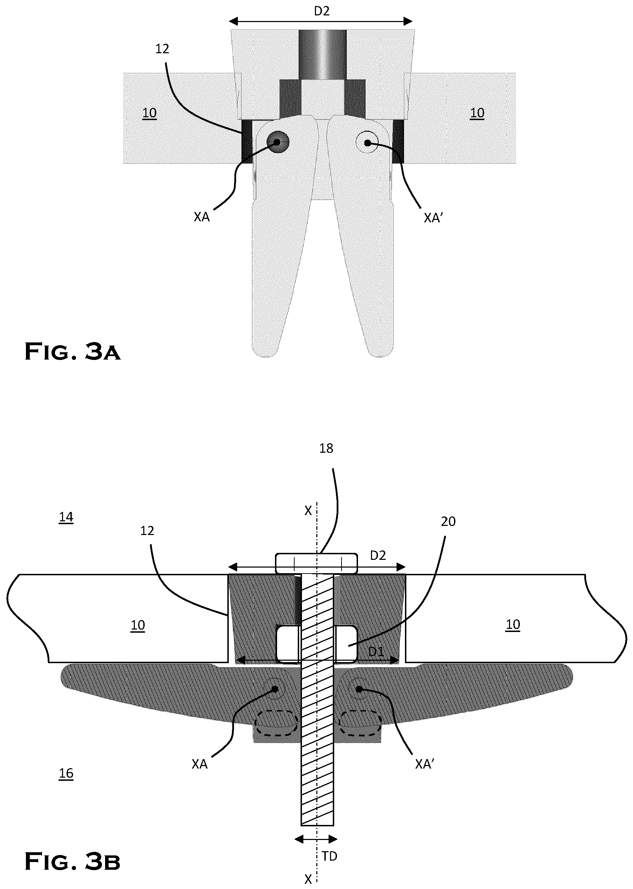

An off-the shelf nut 20 (Figures 3a and 3b) having an hexagonal outer and a threaded inner bore is inserted into the hexagonal bore 158 such that it is rotationally fixed with the central body portion 112.

With reference to Figure 4, the first arm 104 is threaded onto the shaft 140 of the first side body part 108 such that it can pivot about the axis XA. Similarly the second arm 106 is threaded onto the shaft 140' of the second side body part 110 such that it can pivot about the axis XA'.

The central body part 112 is then positioned between the side body parts 108, 110. As the side body parts 108, 110 are brought together, the tip 142 of the shaft 140 enters the facing aperture 144'. Similarly, the tip 142' of the shaft 140' enters the facing aperture 144.

As the side body parts 108, 110 converge, the bridges 129, 129' enter the recesses 154, 156. At the same time, opposing ends of the first portion 148 of the central body portion 112 enter the slots 124, 126, 124', 126'. The body parts 108, 110, 112 therefore become interlocked together.

It will be noted with reference to Figure 1 that the surfaces 152, 166, 168 of the central body part 112 (i.e. the body 102) form a tapered cylindrical outer with the outer faces 120, 120' of the side body parts 108, 110. The cylinder increases in diameter from D1 at an internal side (where the arms 104, 106 are located) to D2 at an external side.

The body parts 108, 110, 112 are adhered together using adhesive.

### Function

The fixing device 100 is used as follows.

With reference to Figures 3a and 3b, an opening 12 is formed in a wall 10 (e.g. plasterboard). The opening 12 is of the a diameter between the smaller and larger diameters D1, D2 of the tapered cylinder of the body 102. The wall 10 has an outwardly facing exterior side 14, and an interior side 16.

The arms 104, 106 of the fixing device 100 are moved together into a retracted position as shown in Figures 2 and 3a. The fixing device 100 is then inserted into the opening 12 such that the pivot axes XA, XA' are on the interior side 16 of the wall 10.

A bolt 18 is provided as known in the art, but selected to have a thread matching that of the nut. The bolt has an outer thread diameter TD.

The bolt 18 is inserted and rotated to engage the nut 20. As the nut 20 is captive in the central body part 112, rotation of the bolt causes axial movement along axis X. The bolt 18 is rotated past the pivot axes XA, XA'. As it is, the cammed outer surface 206 of the wings causes the wings 104, 106 to be rotated about their respective pivot axes XA, XA' from the retracted condition of Figure 3a to the deployed position of Figure 3b. This is a result of the second curved portion 214 being a second, greater radius R2 than the first curved portion 212 at a first radius R1 from the pivot axis XA on the outer surface 206. In other words, in the retracted position the arms 104, 106 define a passage therebetween about axis X which is less than the diameter of the bolt 18. Therefore the only way the bottle 18 can pass is to move the arms 104, 106 to the deployed position.

As the arms 104, 106 move to the deployed position, the feet 190, 190' bear against the inner surface of the wall 10. This generates a "clamping force" which is reacted by the resistance of the body 102 and its diameter. It will also be noted that the anti-rotation features 146, 146', 196, 198 resist both rotation and axial motion (due to the taper) of the device 100 relative to the wall 10.

Once the bolt 18 has been positioned as desired, and the arms 104, 106 are fully deployed, the bolt can be used to hang and mount items on the wall 10.

To remove the device, the steps can be reversed.

### Second embodiment

### Structure

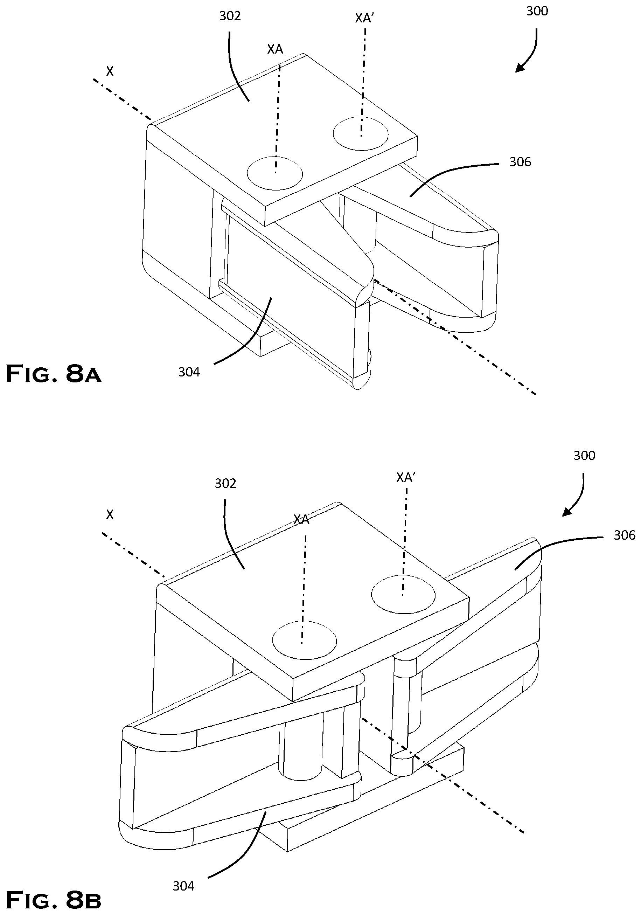

Referring to Figures 8A and 8b, a fixing device 300 not according the present invention is provided comprising a body 302, a first arm 304 and a second arm 306. The body 302 defines a main axis X which represents the main axis of insertion of the device 300 (to be described in more detail below).

In this embodiment, the body 302 and arms 304, 306 are constructed from bent / formed sheet material. Therefore this particular fastener is particularly well suited to construction from sheet metal, making it both strong, durable and inexpensive to manufacture.

### Body

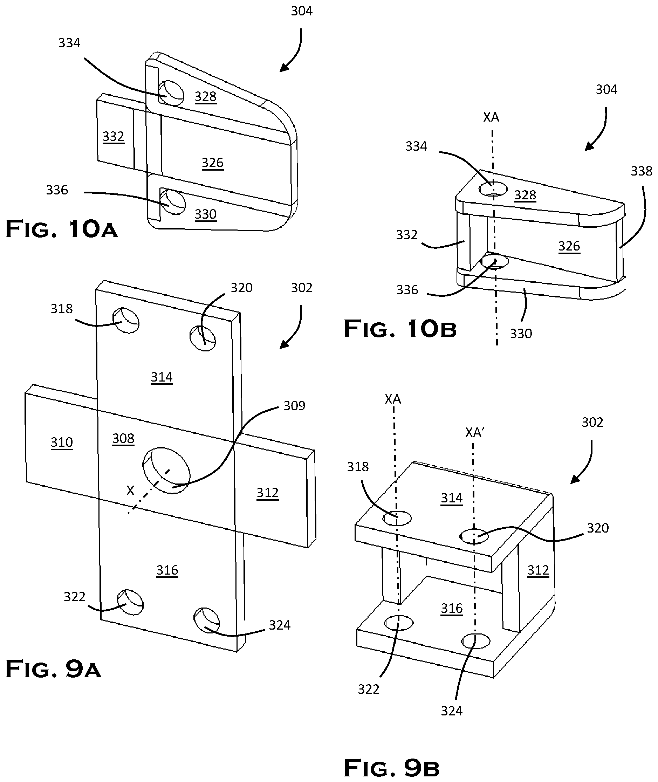

Referring to Figure 9a, an intermediate manufacturing stage of the body 302 is shown. Figure 9b shows the body 302 formed into shape for assembly. The body 302 comprises a base portion 308, first and second side panel regions 310, 312 and first and second pivot mounting regions 314, 316.

The base portion 308 comprises a central aperture 309 on the main axis X.

The first and second pivot mounting regions 314, 316 comprise apertures 318, 320, 322, 324 through the thickness thereof. Each of the regions 308, 310, 312, 314, 316 are rectangular in shape and connected to form a "net". In Figure 9a these regions are coplanar, and cut from sheet material. Moving from Figure 9a to 9b, the regions 310, 312, 314, 316 have been moved through 90 degrees to form a box-like body 302. The ends of the first and second pivot mounting regions 314, 316 project beyond the first and second side panel regions 310, 312, where the apertures 318, 320, 322, 324 are defined. Apertures 318, 322 are aligned on a first arm pivot axis XA, and apertures 322, 324 are aligned on a second arm pivot axis XA'. The pivot axes XA, XA' are normal to the main axis X.

### Arms

The arms 304, 306 are identical, and as such only the arm 304 will be described in detail.

Referring to Figure 10a an intermediate manufacturing stage of the arm 304 is shown. Figure 10b shows the arm 304 formed into shape for assembly. The arm 304 comprises a base portion 326, first and second side panel regions 328, 330 and first and a tab 332.

The first and second side panel regions 328, 330 comprise apertures 334, 336 through the thickness thereof. The first and second side panel regions are tapered so as to be triangular in shape extending from their widest point proximate the tab 332 to a free end 338 distal to the tab 332.

Moving from Figure 10a to 10b, the regions 328, 330, 332 have been moved through 90 degrees to form the arm 304. Apertures 334, 336 are aligned on a first arm pivot axis XA (XA' for the arm 306).

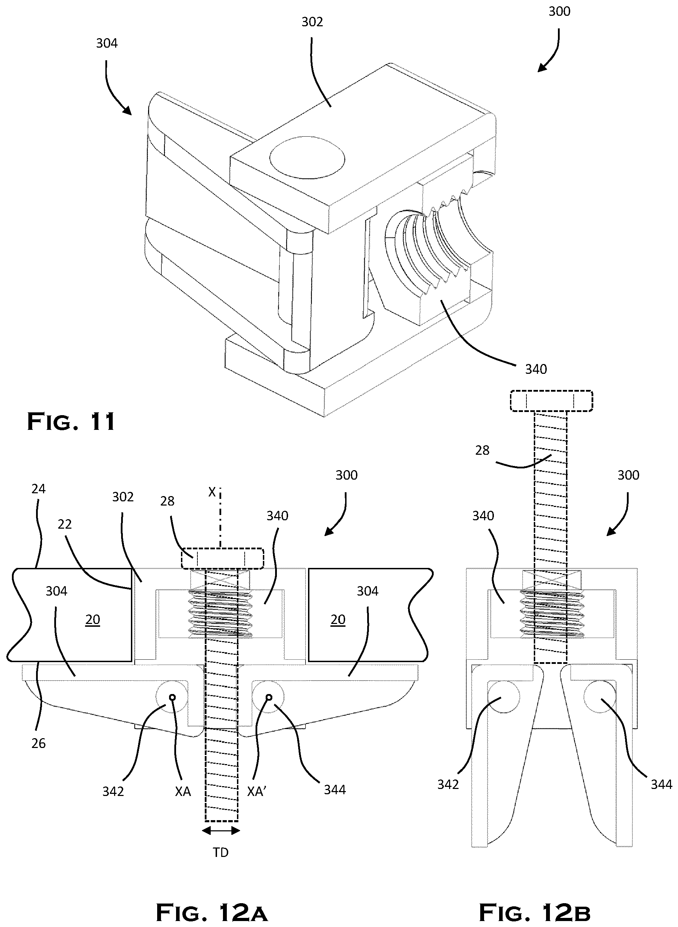

The arms can therefore rotate in opposite directions from a stowed position (Figures 8a and 12b) where they are aligned with the main axis X and fall within the axial envelope or "footprint" of the body 302, and a deployed position (Figures 8b and 12a) where they have been rotated 90 degrees to extend normal to the main axis X to extend from the sides of the body 302 in opposite directions.

### Assembly

Referring to Figure 11, an internally threaded member 340 (in this case a nut) is provided and attached (e.g. adhered or welded) to the base portion 308 on the interior side of the body 302, such that it is aligned with the aperture 309.

Each arm 304, 306 is inserted between the projecting ends of the first and second pivot mounting regions 314, 316 such that the apertures align. Pivot pins 342, 344 are provided (Figures 12a and 12b) on axes XA and XA' to permit rotation of the arms 304, 306 about the axes.

### Function

The fixing device 300 is used as follows.

With reference to Figure 12a, an opening 22 is formed in a wall 20 (e.g. plasterboard). The opening 22 is the same shape as the body 302 (i.e. rectangular). The wall 20 has an outwardly facing exterior side 24, and an interior side 26.

The arms 304, 306 of the fixing device 300 are moved together into a retracted position as shown in Figures 8a and 12b. The fixing device 300 is then inserted into the opening 22 such that the pivot axes XA, XA' are on the interior side 26 of the wall 20.

A bolt 28 is provided as known in the art, but selected to have a thread matching that of the nut 340. The bolt has an outer thread diameter TD.

The bolt 28 is inserted and rotated to engage the nut 340. As the nut 340 is captive relative to the body 302, rotation of the bolt causes axial movement along axis X. The bolt 28 is rotated past the pivot axes XA, XA'. As it is, the arms 304, 306 are rotated about their respective pivot axes XA, XA' from the retracted condition of Figure 12b a to the deployed position of Figure 12a. In the retracted position the arms 304, 306 define a passage therebetween about axis X which is less than the diameter of the bolt 28. Therefore the only way the bolt 28 can pass is to move the arms 304, 306 to the deployed position.

As the arms 304, 306 move to the deployed position, the base portions 326 bear against the inner surface of the wall 20. This generates a "clamping force" which is reacted by the resistance of the body 102 and its diameter. It will also be noted that the polygonal shape of the body 302 resists rotation of the device 300 relative to the wall 20.

Once the bolt 28 has been positioned as desired, and the arms 304, 306 are fully deployed, the bolt can be used to hang and mount items on the wall 20.

To remove the device, the steps can be reversed.

### Third embodiment

### Structure

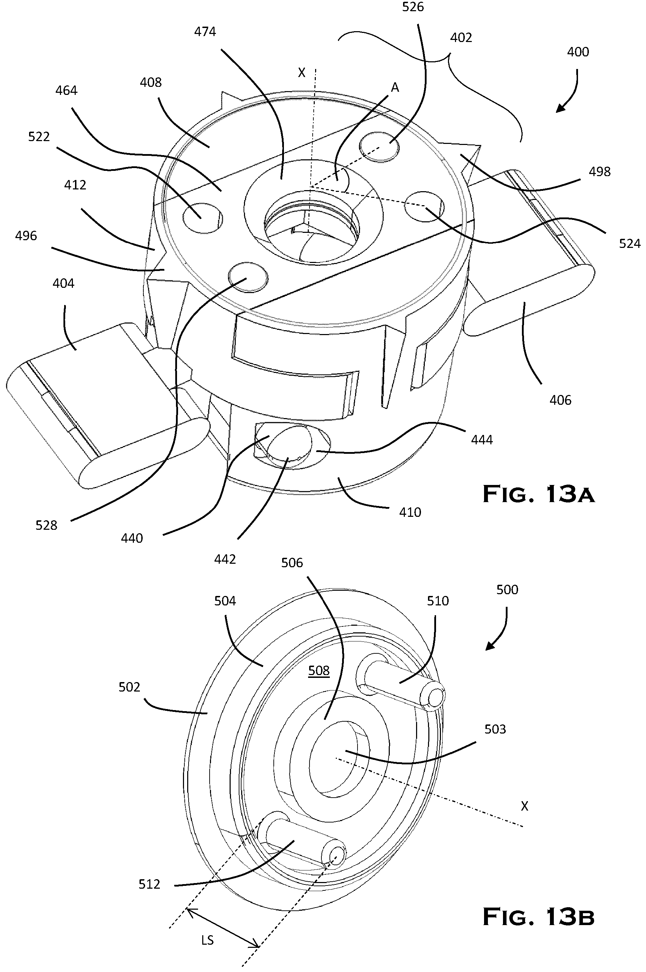

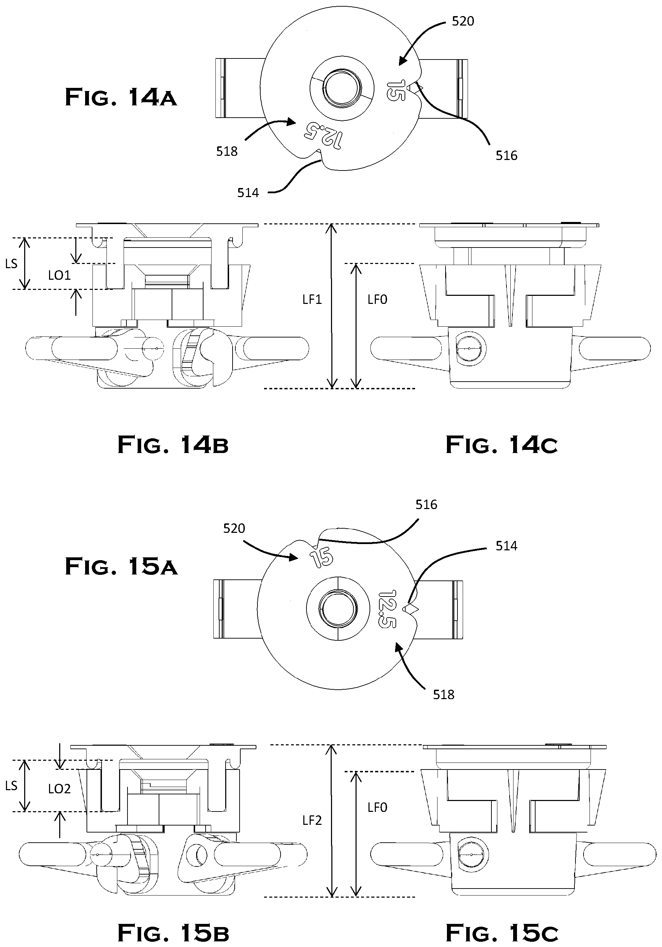

Referring to Figures 13a to 15c, a fixing device 400 according to the invention comprises a body 402, a first arm 404 and a second arm 406. The body 402 defines a main axis X, which also represents the main axis of insertion of the device 100 (to be described in more detail below). The device 400 further comprises a length adjusting element in the form of a washer 500 (Figure 13b).

Referring to Figure 4, the body 402 comprises a first side body part 408, a second side body part 410 and a central body part 412.

### Side body parts

The side body parts 408, 410 are identical, and similar to the side body parts 108, 110 as described with respect to the first embodiment. Therefore, they will not be described in detail here.

Each side body part comprises a the shaft 440 having a tip 442 on one side, and an aperture 444 on the other (like the side body parts of the first embodiment).

### Central body part

The central body part 412 is similar to the central body part 112 of the first embodiment. The central body part 412 defines an end surface 464, much like the end surface 164 of the central body part 112. A countersunk cylindrical bore 474 extends from the end surface 464 through the central body part 412.

Two pairs of blind bores are provided extending from the end surface 464 into the central body part 412. The first pair of blind bores 522, 524 have an axial depth of LO1 (Figure 14B). The second pair of blind bores 526, 528 have an axial depth of LO2 (Figure 15B) where LO2 > LO1. Each pair of bores is diametrically opposed about the axis X, and a line joining the centre of each bore in each respective pair passes through X. The first pair and second pair are a first angle A apart.

Also on the radially outer faces of the central body part 412, there are defined two diametrically opposed anti-rotation features in the form of tapered ribs 496, 498. These are similar to the ribs 196, 198.

### Arms

The arms 404, 406 are identical, and similar to the arms 104, 106. As such they will not be described in detail here.

### Washer

The washer 500 is a unitary component (in this embodiment moulded from a plastics material). The washer 500 comprises an annular body 502 having a first cylindrical support flange 504 and a second cylindrical support flange 506 extending therefrom. The annular body has a circular opening 503 at the geometric centre thereof. The second flange 506 is concentric with, and within the first flange 504 defining an annular region 508 therebetween. A first support shaft 510 and second support shaft 512 extend from the annular region 508, being diametrically opposed about the axis X of the washer 500. Each shaft 510, 512 has a length LS.

Referring to Figures 14a and 15a, the body 502 defines two marker notches 514, 516 at predetermined angular positions about its periphery (note that these are not visible in Figure 13b). Each notch 514, 516 is accompanied by information 518, 520 respectively indicating the length of the fastener LF.

### Assembly

Assembly is broadly similar to the first embodiment, with the exception of two differences.

Firstly, after the side body parts 408, 410 are brought together, and the tip 442 of each shaft 440 has entered the respective facing aperture 444, the shaft tips 442 are heated and upset (i.e. deformed to form a head) which resists any pull-out from the aperture 444. This is not depicted in the figures, but the skilled addressee will be familiar with the technique from e.g. riveting.

Secondly, the device 400 may be used in any of three configurations. In a first configuration, the device does not utilise the washer 500. It is installed per Figure 13a, having an axial length of LF0 (Figure 14c).

The washer 500 can be engaged with the shafts 510, 512 engaged in the first pair of openings 522, 524. In this configuration, the washer 500 is able to travel until the ends of the shafts 510, 512 abut the ends of the openings 522, 524. Due to the fact that LO1 < LS, the body 502 of the washer is offset from the rest of the device, providing an axial length LF1 > LF0.

In a third configuration, the washer 500 can be engaged with the shafts 510, 512 engaged in the second pair of openings 526, 528. In this configuration, the washer 500 is able to travel until the flange 504 abuts the upper surface of the device body. This is because LO2 > LO1, providing an axial length LF2, where LF1 > LF2 > LF0.

Selection of the second and third configurations is enabled by liming up the notch 514, 516 proximate the relevant information 518, 520 (typically length in mm or inches) with the rib 498 (Figures 14 and 15a).

### Function

The fixing device 400 is used as per the device 100. The primary difference is that the length of the device can be set between three levels (LF0, LF1, LF2). This allows the device to be installed in a range of thickness of board without being too loose or crushing the board.

### Fourth embodiment

### Structure

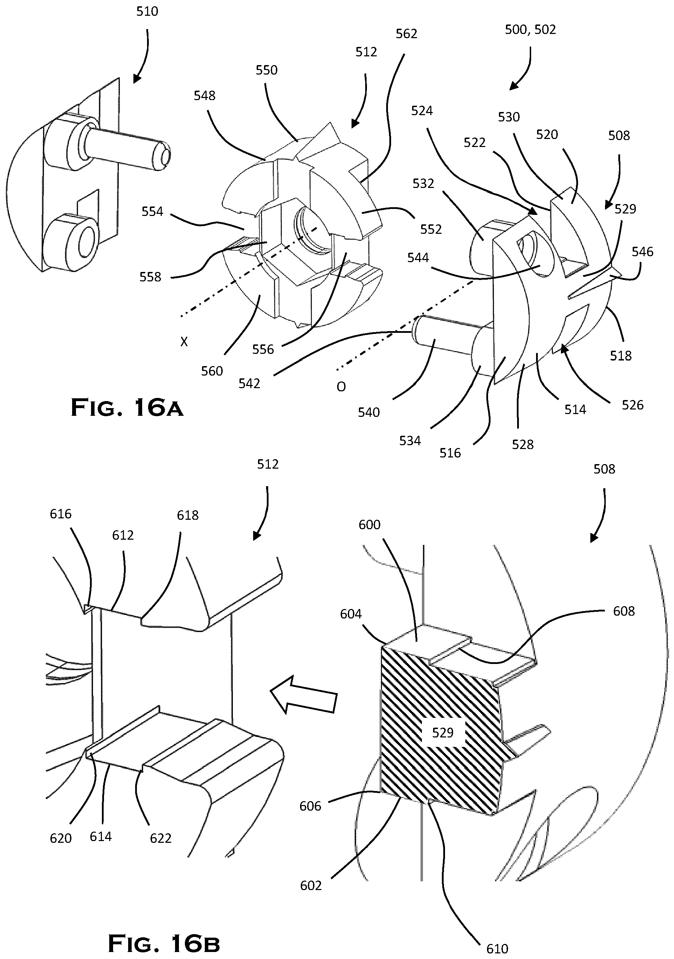

Referring to Figures 16a to 16b, a fixing device 500 not according to the invention comprises a body 502. A pair of arms are also provided (like the first arm 104 and the second arm 106 of the first embodiment) but are not shown. The body 502 defines a main axis X, which also represents the main axis of insertion of the device 500 (to be described in more detail below).

Referring to Figure 16a, the body 502 comprises a first side body part 508, a second side body part 510 and a central body part 512.

### Side body parts

The side body parts are identical, and as such only the first side body part 508 will be described here. Referring to Figure 16a, the first side body part 508 comprises a main portion 514 being generally prismatic, and having a circle segment cross-section. The circle-segment cross-section has an origin O which lies on the axis X when assembled.

The main portion 514 has a first end face 516, a second end face 518, an external face 520 and an internal face 522. The external face 520 defines a part-cylinder coincident with the arc of the segment, and the internal face 522 lies on a chord of the circle segment (and is therefore flat).

The main portion 514 has two slots 524, 526 partway along its axial length. The slots 524, 526 are symmetrical and generally rectangular. A central bridge 529 is defined between the slots such that the main portion 514 defines an "H" shape in plan. Because the slots 524, 526 are not midway along the axial length of the main portion 514, it has a major section 528 on a first side of the slots 124, 126 and a minor section 530 on a second, opposite side of the slots 524, 526.

Referring to Figure 16b, the side body part 508 is shown in section. The central bridge 529 defines a first tab 600 and a second tab 602 extending from the sidewalls thereof. Each tab defines a first shoulder 604, 608 and a second shoulder 606, 610 respectively.

Extending from the internal face 522 of the major section 528, proximate the first end face 516, there are provided two spaced apart abutments 532, 534. Each abutment 532, 534 is generally obround in cross-section.

Extending from one of the abutments 534, there is provided a shaft 540. The shaft 540 is generally circular in cross-section having a free end terminating in a tip 542.

A shaft aperture 544 is provided through the other abutment 532 extending into the main portion 514. The shaft aperture 544 is an open bore extending to the external face 520.

Also on the external face 520, there is defined an anti-rotation feature in the form of a tapered rib 546.

### Central body part

The central body part 512 comprises a first portion 548 and a second portion 550.

The first portion 548 is a generally cylindrical body having an end surface 560, a shoulder surface 562 opposite the end surface 560 and a radially outer curved surface 552 joining the end and shoulder surfaces. The radially outer surface 552 is interrupted by first and second diametrically opposed radially extending recesses 554, 556.

Each recess comprises a first slot 612 and a second slot 614, facing each other in opposing walls. Each slot defines a first shoulder 616, 620 and a second shoulder 618, 622 respectively.

At the centre of the first portion 548, open to the end surface 560, there is provided a hexagonal bore 558, which extends in an axial direction along X.

The second portion 550 is generally rectangular in shape, extending from the first portion and being oriented at 90 degrees to the recesses 554, 556 of the first portion 548.

Other features of the central body part are as per the first embodiment.

### Assembly

As with the first embodiment, an off-the shelf nut 2 is inserted into the hexagonal bore 558 such that it is rotationally fixed with the central body portion 512.

The arms are mounted for rotation on the shafts 540.

The central body part 512 is then positioned between the side body parts 508, 510. As the side body parts 508, 510 are brought together, the tip 542 of each shaft 540 enters the facing aperture 544.

As the side body parts 508, 510 converge, the bridges 529 enter the recesses 554, 556. The tabs 600, 602 push the opposing walls of the slots 556, 554 apart until they enter the slots 612, 614 at which point the respective side body part is "snap-fitted" into the recess to inhibit removal thereof.

This avoids the need to adhere the body parts 508, 510, 512 together.

### Fifth embodiment

### Structure

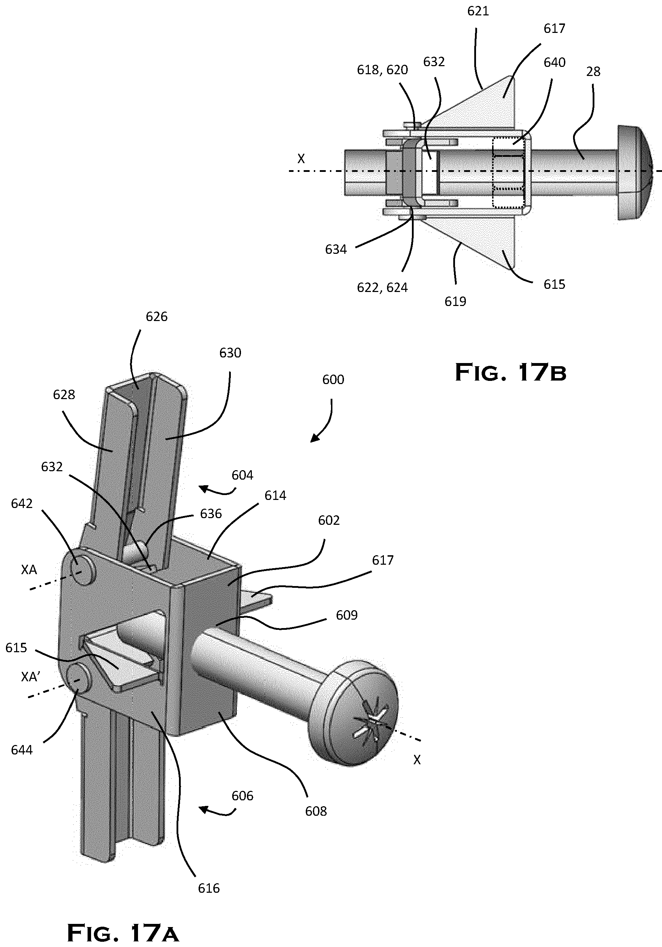

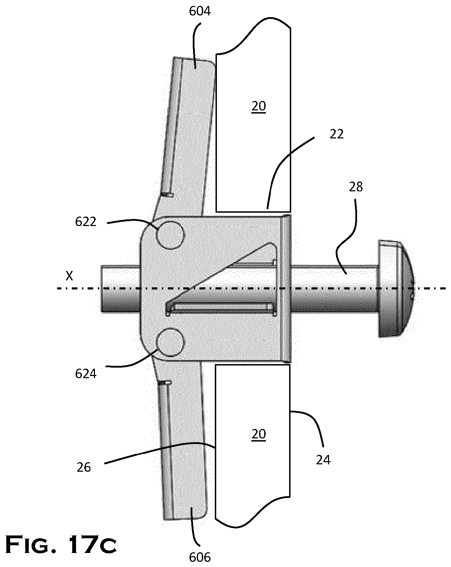

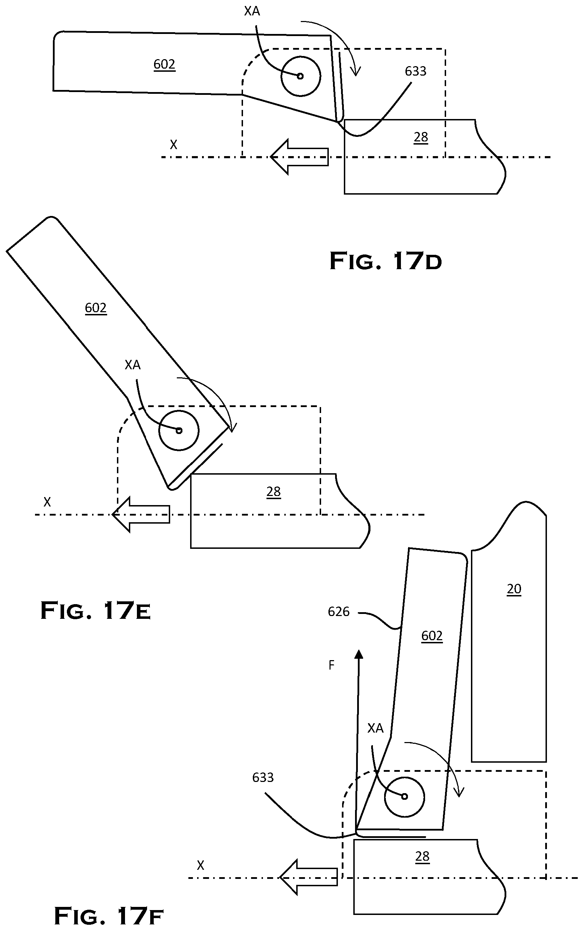

The fifth embodiment shown in Figures 17a to 17c is similar to the second embodiment inasmuch as it is constructed from folded metal components.

Referring to Figures 17a to 17c, a fixing device 600 not according the present invention is provided comprising a body 602, a first arm 604 and a second arm 606. The body 602 defines a main axis X which represents the main axis of insertion of the device 600 (to be described in more detail below).

In this embodiment, the body 602 and arms 604, 606 are constructed from bent / formed sheet material. Therefore this particular fastener is particularly well suited to construction from sheet metal, making it both strong, durable and inexpensive to manufacture.

### Body

The body 602 comprises a base portion 608, and first and second wings 614, 616.

The base portion 608 comprises a central aperture 609 on the main axis X.

The first and second wings 614, 616 comprise apertures 618, 620, 622, 624 through the thickness thereof. Each of the regions 608, 614, 616 are rectangular in shape and connected to form a "net". As with the second embodiment, the regions 314, 316 are moved through 90 degrees to form a box-like body 602.

Each wing 614, 616 defines a tab 615, 617, which is defined by a V-shaped cut. Each tab 615, 617 is triangular, and bent outwardly from the base portion 608 by 90 degrees to as to project from each wing. Each tab 615, 617 defines a tapered edge 619, 621 and widens towards the base portion 608.

Apertures 618, 622 are aligned on a first arm pivot axis XA, and apertures 622, 624 are aligned on a second arm pivot axis XA'. The pivot axes XA, XA' are normal to the main axis X.

### Arms

The arms 604, 606 are identical, and as such only the arm 604 will be described in detail.

The arm 604 comprises a base portion 626, first and second side panel regions 628, 630 and a tab 632.

The first and second side panel regions 628, 630 comprise apertures 634, 636 through the thickness thereof. The first and second side panel regions are rectangular in shape.

The tab 632 is formed into a cammed surface 633 at the base of the arm, the cammed surface having a variable radius from the centre of the apertures 634, 636.

The arms can therefore rotate in opposite directions from a stowed position where they are aligned with the main axis X and fall within the axial envelope or "footprint" of the body 602, and a deployed position where they have been rotated 90 degrees to extend normal to the main axis X to extend from the sides of the body 602 in opposite directions.

### Assembly

Referring to Figure 17a, an internally threaded member 640 (in this case a nut) is provided and attached (e.g. adhered or welded) to the base portion 608 on the interior side of the body 602, such that it is aligned with the aperture 609.

Each arm 604, 606 is inserted between the projecting ends of the first and second wings 614, 616 such that the apertures align. Pivot pins 642, 644 are provided on axes XA and XA' to permit rotation of the arms 604, 606 about the axes. In a preferred embodiment, the pivot pins are non-rotatable with respect to the body 602 (for example, they may be attached or keyed to the body). Referring to Figure 17a in particular, it can be seen that each wing 614, 616 is U-shaped in cross-section, and that the base portion 626 of the 'U' is positioned away from the interior surface of the wall in-use. In other words, the free ends of the side panel regions 628, 630 contact the interior surface of the wall. This is beneficial as will be described below.

### Function

The fixing device 600 is used as follows.

A circular opening 22 is formed in a wall 20 (e.g. plasterboard). The wall 20 has an outwardly facing exterior side 24, and an interior side 26.

The arms 604, 606 of the fixing device 300 are moved together into a retracted position as shown in Figure 17d (various other parts of the device 600 are omitted). The fixing device 600 is then inserted into the opening 22 such that the pivot axes XA, XA' are on the interior side 26 of the wall 20. The tapered edges of the wings 615, 617 bear against the periphery of the opening 22 and also prevent pull-through of the device 600.

A bolt 28 is provided as known in the art, but selected to have a thread matching that of the nut 640. The bolt has an outer thread diameter TD.

The bolt 28 is inserted and rotated to engage the nut 640. As the nut 640 is fixed to to the body 602, rotation of the bolt causes axial movement along axis X. The bolt 28 is rotated past the pivot axes XA, XA'. As it is, the arms 604, 606 are rotated about their respective pivot axes XA, XA' from the retracted condition of Figure 17d a to the deployed position of Figure 17f. In the retracted position the arms 604, 606 define a passage therebetween about axis X which is less than the diameter of the bolt 28 (due to the cammed surface 633). Therefore the only way the bolt 28 can pass is to move the arms 604, 606 to the deployed position.

As the arms 604, 606 move to the deployed position, they bear against the inner surface of the wall 20. This generates a "clamping force" which is reacted by the resistance of the body 602, and in particular the engagement of the wings 615, 617 against the periphery of the opening 22. The fact that the wings "bite" into the wall material (e.g. plasterboard) also inhibits rotation of the device 600.

As discussed above, the free edges of the side panel regions 628, 630 abut the interior side of the wall 20. Referring to Figure 17f, the cammed surface 633 is subject to a clamping force F which results in a clamping torque about XA. The force F increases rapidly when the arms 604, 606 contact the inside of the wall 20, and at that position the force F is primarily exerted through the cam on the opposite side of the axis XA to the wall 20. In this embodiment, that force is reacted by the entire base portion 626 of the arm 604 which resists deformation. Comparing to Figure 10A, the metal from which the tab 332 is constructed needs to be quite thick to resist the clamping force exerted by the screw 28 (see Figure 12a). This problem does not occur if the arms are reversed per Figure 17a.

Once the bolt 28 has been positioned as desired, and the arms 604, 606 are fully deployed, the bolt can be used to hang and mount items on the wall 20.

To remove the device, the steps can be reversed.

### Variations

Variations fall within the scope of the invention.

The invention may be manufactured to suit several sizes of fastener, for example M4 or M6 thread sizes.

Instead of adhered, the body parts may be secured by e.g. push or interference fit.

The parts may be constructed from different materials. The shafts 140, 140' in particular may be constructed from a metal material to increase the strength of the assembly.

Any axially moveable fastener can be used.

The third embodiment may be provided with further sets of holes, offering further configurations. It may also be provided with only one set, offering just two configurations.

## Claims

1. A fixing device (400) for attaching a fastener to a wall, the device (400) comprising:
a body (402) having a threaded fastener-receiving aperture defined therein, the aperture defining a main axis (X) of the fixing device; and,
at least two arms (404, 406) pivotably mounted to the body between:
a retracted position in which the device is insertable into an opening in a wall from a first side of the wall; and,
an extended position in which the arms bear against a second side of the wall to inhibit removal of the device from the opening;
wherein the arms are configured to be retained in the extended position by a threaded fastener inserted in the threaded fastener-receiving aperture;
a length-adjusting element (500) configured for assembly with the body, the length adjusting element having a first position in which the fixing device has a first axial length, and a second position in which the fixing device has a second axial length different to the first.

2. A fixing device (400) according to claim 1wherein the body has an internally threaded member mounted thereto defining the threaded fastener-receiving aperture.

3. A fixing device (400) according to claim 1, wherein the body comprises:
a first end face which is on the interior side of a wall in use;
a second end face which is on the exterior side of a wall in use; and,
an anti-rotation feature in the form of a tapered rib extending in an axial direction on the outer surface thereof from the first face becoming wider and taller towards the second face.

4. A fixing device (400) according to claim any preceding claim, wherein the length-adjusting element (500) is rotated about the axis between the first position and the second position.

5. A fixing device (400) according to any preceding claim, wherein the body and the length-adjusting element are attached via a male-female mating connection.

6. A fixing device (400) according to claim 5, in which the male-female mating connection comprises a male member (510) configured to mate with a first female formation (522) in the first position and a second female formation (528) in the second position.

7. A fixing device (400) according to claim 6, in which the first and second female formations (522, 528) are different axial lengths, limiting the degree of entry of the male member in at least one of the positions.

8. A fixing device (400) according to any preceding claim, wherein the length-adjusting element comprises an indicator (518) indicating the axial length dependent on the position relative to the body.

9. A fixing device (400) according to any preceding claim, wherein the arms are moved from the retracted position to the extended position by insertion of a fastener.

10. A fixing device (400) according to claim 9, wherein the fastener passes through the length-adjusting element.

11. A fixing device (400) according to any preceding claim, wherein shafts are defined on the body, and in which the arms define openings arranged to received the shafts to enable pivotable movement.

12. A fixing device (400) according to claim 11, wherein the body is constructed from at least two body parts (408, 410), and in which one of the body parts defines at least one of the shafts, and in which the other of the body parts defines a bore for receiving a free end of the at least one of the shafts.

13. A fixing device (400) according to claim 12, comprising a central body part (412) between the at least two body parts, wherein the central body part defines the fastener receiving aperture (474).

14. A fixing device (400) according to any preceding claim, in which the body is tapered such that it becomes wider approaching an exterior side in use.

15. A fixing device (400) according to any preceding claim, in which the body comprises arm abutments spaced apart from the pivot axes of the arms, which arm abutments are configured to abut and thereby restrict movement of each arm off its pivot axis.

## Patentansprüche

1. Fixierungsvorrichtung (400) zum Anbringen eines Befestigungsmittels an einer Wand, die Vorrichtung (400) umfassend:
einen Körper (402), der einen in demselben definierten Befestigungsmittel-aufnehmenden Gewindedurchlass aufweist, wobei der Durchlass eine Hauptachse (X) der Fixierungsvorrichtung definiert; und
mindestens zwei Arme (404, 406), die schwenkbar an dem Körper zwischen Folgendem montiert sind:
einer eingefahrenen Position, in der die Vorrichtung in eine Öffnung in einer Wand von einer ersten Seite der Wand eingeführt werden kann; und
einer ausgefahrenen Position, in der die Arme gegen eine zweite Seite der Wand drücken, um ein Entfernen der Vorrichtung aus der Öffnung zu verhindern;
wobei die Arme dazu konfiguriert sind, in der ausgefahrenen Position durch ein Gewindebefestigungselement gehalten zu werden, das in den Befestigungsmittel-aufnehmenden Gewindedurchlass eingeführt ist;
ein Längeneinstellelement (500), das zum Zusammenbau mit dem Körper konfiguriert ist, wobei das Längeneinstellelement eine erste Position, in der die Fixierungsvorrichtung eine erste axiale Länge aufweist, und eine zweite Position aufweist, in der die Fixierungsvorrichtung eine zweite axiale Länge aufweist, die sich von der ersten unterscheidet.

2. Fixierungsvorrichtung (400) nach Anspruch 1, wobei der Körper ein daran montiertes Innengewindebauteil aufweist, das den Befestigungsmittel-aufnehmenden Gewindedurchlass definiert.

3. Fixierungsvorrichtung (400) nach Anspruch 1, wobei der Körper Folgendes umfasst:
eine erste Endfläche, die in Verwendung auf der Innenseite einer Wand liegt;
eine zweite Endfläche, die in Verwendung auf der Außenseite einer Wand liegt; und
eine Drehschutzfunktion in der Form einer konischen Rippe, die sich in axialer Richtung auf der äußeren Oberfläche desselben von der ersten Fläche erstreckt, wobei sie in Richtung der zweiten Fläche breiter und größer wird.

4. Fixierungsvorrichtung (400) nach einem der vorhergehenden Ansprüche, wobei das Längeneinstellelement (500) zwischen der ersten Position und der zweiten Position um die Achse gedreht wird.

5. Fixierungsvorrichtung (400) nach einem der vorhergehenden Ansprüche, wobei der Körper und das Längeneinstellelement über eine zusammenpassende Stecker-/Buchsenverbindung angebracht sind.

6. Fixierungsvorrichtung (400) nach Anspruch 5, in der die zusammenpassende Stecker-/Buchsenverbindung ein Steckerbauteil (510) umfasst, das dazu konfiguriert ist mit einer ersten Buchsenformation (522) in der ersten Position und mit einer zweiten Buchsenformation (528) in der zweiten Position zusammenzupassen.

7. Fixierungsvorrichtung (400) nach Anspruch 6, in der die erste und die zweite Buchsenformation (522, 528) unterschiedliche axiale Längen aufweisen, sodass der Eindringgrad des Steckerbauteils in mindestens einer der Positionen begrenzt wird.

8. Fixierungsvorrichtung (400) nach einem der vorhergehenden Ansprüche, wobei das Längeneinstellelement einen Indikator (518) umfasst, der die axiale Länge abhängig von der Position relativ zu dem Körper angibt.

9. Fixierungsvorrichtung (400) nach einem der vorhergehenden Ansprüche, wobei die Arme durch Einführen eines Befestigungsmittels von der eingefahrenen Position in die ausgefahrene Position bewegt werden.

10. Fixierungsvorrichtung (400) nach Anspruch 9, wobei das Befestigungsmittel durch das Längeneinstellelement verläuft.

11. Fixierungsvorrichtung (400) nach einem der vorhergehenden Ansprüche, wobei Wellen an dem Körper definiert sind, und in der die Arme Öffnungen definieren, die dazu angeordnet sind, die Wellen aufzunehmen, um eine schwenkbare Bewegung zu ermöglichen.

12. Fixierungsvorrichtung (400) nach Anspruch 11, wobei der Körper aus mindestens zwei Körperteilen (408, 410) aufgebaut ist, und in der einer der Körperteile mindestens eine der Wellen definiert, und in der der andere der Körperteile eine Bohrung zum Aufnehmen eines freien Endes der mindestens einen der Wellen definiert.

13. Fixierungsvorrichtung (400) nach Anspruch 12, umfassend einen zentralen Körperteil (412) zwischen den mindestens zwei Körperteilen, wobei der zentrale Körperteil den Befestigungsmittel-aufnehmenden Durchlass (474) definiert.

14. Fixierungsvorrichtung (400) nach einem der vorhergehenden Ansprüche, in der der Körper konisch ist, sodass er breiter wird, je mehr er sich in Verwendung einer Außenseite nähert.

15. Fixierungsvorrichtung (400) nach einem der vorhergehenden Ansprüche, in der der Körper Armauflager umfasst, die von der Schwenkachse der Arme beabstandet sind, wobei die Armauflager dazu konfiguriert sind, aufzuliegen und dadurch eine Bewegung jedes Arms weg von seiner Schwenkachse zu beschränken.

## Revendications

1. Dispositif de fixation (400) destiné à relier un élément de fixation à une paroi, le dispositif (400) comprenant :
un corps (402) présentant un orifice de réception d'un élément de fixation fileté défini en son sein, l'orifice définissant un axe principal (X) du dispositif de fixation ; et,
au moins deux bras (404, 406) montés de manière pivotante sur le corps entre :
une position rétractée pour laquelle le dispositif est insérable dans une ouverture dans une paroi depuis un premier côté de la paroi ; et,
une position déployée pour laquelle les bras s'appuient contre un deuxième côté de la paroi afin d'empêcher le retrait du dispositif à partir de l'ouverture ;
dans lequel les bras sont configurés pour être maintenus dans la position déployée par un élément de fixation fileté inséré dans l'orifice de réception d'un élément de fixation fileté ;
un élément de réglage de longueur (500) configuré pour être assemblé avec le corps, l'élément de réglage de longueur présentant une première position pour laquelle le dispositif de fixation présente une première longueur axiale, et une deuxième position pour laquelle le dispositif de fixation présente une deuxième longueur axiale différente de la première.

2. Dispositif de fixation (400) selon la revendication 1, dans lequel le corps présente un composant fileté intérieurement monté sur celui-ci, définissant l'orifice de réception d'un élément de fixation fileté.

3. Dispositif de fixation (400) selon la revendication 1, dans lequel le corps comprend :
une première face d'extrémité qui se trouve sur un côté intérieur d'une paroi en cours d'utilisation ;
une deuxième face d'extrémité qui se trouve sur le côté extérieur d'une paroi en cours d'utilisation ; et,
une fonction anti-rotation sous la forme d'une nervure conique s'étendant selon une direction axiale sur la surface extérieure de celui-ci, depuis la première face et s'élargissant et s'élevant vers la deuxième face.

4. Dispositif de fixation (400) selon l'une quelconque des revendications précédentes, dans lequel l'élément de réglage de longueur (500) est mis en rotation autour de l'axe entre la première position et la deuxième position.

5. Dispositif de fixation (400) selon l'une quelconque des revendications précédentes, dans lequel le corps et l'élément de réglage de longueur sont reliés par l'intermédiaire d'une liaison par emboîtement mâle-femelle.

6. Dispositif de fixation (400) selon la revendication 5, pour lequel la liaison par emboîtement mâle-femelle comprend un composant mâle (510) configuré pour s'accoupler avec un premier logement femelle (522) en première position et avec un deuxième logement femelle (528) en deuxième position.

7. Dispositif de fixation (400) selon la revendication 6, pour lequel les premier et deuxième logements femelles (522, 528) présentent des longueurs axiales différentes, limitant la profondeur d'engagement du composant mâle dans au moins l'une des positions.

8. Dispositif de fixation (400) selon l'une quelconque des revendications précédentes, pour lequel l'élément de réglage de longueur comprend un indicateur (518) indiquant la longueur axiale en fonction de la position par rapport au corps.

9. Dispositif de fixation (400) selon l'une quelconque des revendications précédentes, dans lequel les bras sont déplacés de la position rétractée vers la position déployée par l'insertion d'un élément de fixation.

10. Dispositif de fixation (400) selon la revendication 9, dans lequel l'élément de fixation traverse l'élément de réglage de longueur.

11. Dispositif de fixation (400) selon l'une quelconque des revendications précédentes, dans lequel des tiges sont définies sur le corps, et pour lequel les bras définissent des ouvertures agencées pour recevoir les tiges afin de permettre un mouvement pivotant.

12. Dispositif de fixation (400) selon la revendication 11, dans lequel le corps est constitué d'au moins deux parties de corps (408, 410), et pour lequel l'une des parties de corps définit au moins une des tiges, et pour lequel l'autre des parties de corps définit un alésage destiné à recevoir une extrémité libre de ladite au moins une des tiges.

13. Dispositif de fixation (400) selon la revendication 12, comprenant une partie centrale de corps (412) entre lesdites au moins deux parties de corps, dans lequel la partie centrale de corps définit l'orifice de réception d'un élément de fixation (474).

14. Dispositif de fixation (400) selon l'une quelconque des revendications précédentes, dans lequel le corps est conique de sorte qu'il s'élargit en s'approchant du côté extérieur en cours d'utilisation.

15. Dispositif de fixation (400) selon l'une quelconque des revendications précédentes, pour lequel le corps comprend des butées de bras espacées des axes de pivotement des bras, lesquelles butées de bras sont configurées pour venir en butée et ainsi limiter le mouvement de chaque bras hors de son axe de pivotement.
